# EUROPÄISCHE PATENTSCHRIFT

(11) **EP 1 306 278 B1**
(45) Veröffentlichungstag und Bekanntmachung des Hinweises auf die Patenterteilung: **21.05.2008**
(21) Anmeldenummer: 02023093.4
(22) Anmeldetag: 17.10.2002
(51) Int. Cl.: B60T 7/16

(54) **Steuervorrichtung zur Verwendung in einem Fahrschulfahrzeug und zugehöriger Fahrlehrerstand**
Control device for a driving school vehicle and affiliated driving instructor post
Dispositif de contrôle pour vehicule d'auto-ecole et poste de moniteur d'auto-ecole associé

(30) Priorität: 23.10.2001 DE 20117325 U
(43) Veröffentlichungstag der Anmeldung: 02.05.2003
(73) Patentinhaber: Pilz, Karlheinz, 81247 München (DE)
(72) Erfinder: Pilz, Karlheinz, 81247 München (DE)
(74) Vertreter: Seitz, Ralf Hans Frank

(56) Entgegenhaltungen:
- EP-A- 0 290 364
- EP-A- 0 419 897
- US-A- 5 448 479
- US-A- 5 865 624

## Beschreibung

Die vorliegende Erfindung betrifft eine Steuervorrichtung in einem Fahrschulfahrzeug und einen Fahrlehrerstand, der mit der Steuervorrichtung gekoppelt ist.

Bei dem herkömmlichen Fahrschulungssystem mit Steuervorrichtung und Fahrlehrerstand, vergleiche z.B. DE 201 09 242.5, DE 100 47 150 C1, DE 201 11 877.7 und DE 201 08 411.2, sitzt der Fahrlehrer bei einer Schulungsfahrt auf dem Beifahrersitz neben dem Fahrschüler im Fahrschulfahrzeug. Diese unmittelbare Anwesenheit des Fahrlehrers kann einen negativen Einfluss auf den Fahrschüler haben, denn der Fahrschüler wird durch die Anwesenheit des Fahrlehrers oftmals gestört oder sogar nervös gemacht oder der Fahrschüler verlässt sich zu stark auf das Eingreifen des Fahrlehrers. Dies entspricht jedoch nicht einer realen Fahrsituation, für die der Fahrschüler ausgebildet werden soll.

Das Dokument EP 0 290 364 beschreibt einen stationär in einem Turm eingerichteten Fahrlehrerstand, der mit einem Fahrschulfahrzeug per Funk gekoppelt ist.

Die Aufgabe der vorliegenden Erfindung ist es, eine Steuervorrichtung in einem Fahrschulfahrzeug und einen zugehörigen Fahrlehrerstand anzugeben, die so weit wie möglich eine reale Fahrsituation ermöglichen.

Diese Aufgabe wird durch die Steuervorrichtung nach Anspruch 1 bzw. durch den zugehörigen Fahrlehrerstand nach Anspruch 7 gelöst. Demnach steuert die Steuervorrichtung der Erfindung zur Verwendung in einem Fahrschulfahrzeug, das von dem Fahrschüler gefahren wird, Funktionen oder Einrichtungen des Fahrschulfahrzeugs und ist mit einem Fahrlehrerstand, der sich außerhalb des Fahrschulfahrzeugs befindet, zur Fernsteuerung von Funktionen des Fahrschulfahrzeugs koppelbar.

Die Steuervorrichtung bzw. der Fahrlehrerstand der Erfindung ermöglichen, dass der Fahrschüler das Fahrschulfahrzeug alleine fährt und steuert, d.h. ohne Anwesenheit des Fahrlehrers im Fahrschulfahrzeug, wodurch eine sehr reale Fahrsituation bei der Schulungsfahrt gegeben ist und dennoch, falls erforderlich, ein Eingreifen des Fahrlehrers in den Fahrbetrieb des Fahrschulfahrzeugs über die Fernsteuerung von Funktionen, Einrichtungen und Anlagen des Fahrschulfahrzeugs ermöglicht wird.

Bevorzugt können z.B. eine Gasanlage, eine Bremsanlage, eine Kupplungsanlage, eine Lenkanlage, eine Blinkanlage oder eine Lichtanlage des Fahrschulfahrzeugs von dem Fahrlehrerstand aus vorrangig gegenüber der steuernden Betätigung durch den Fahrschüler ferngesteuert werden. Hierzu sind in dem Fahrschulfahrzeug entsprechende Aktoren, Aktuatoren oder Stellglieder vorgesehen, die z.B. mit den entsprechenden Pedalen auf der Fahrerseite des Fahrschulfahrzeugs gekoppelt sind. Die Aktoren können jeweils einen Elektromotor bzw. Schrittmotor und/oder eine Hydraulikeinrichtung aufweisen.

Die Steuervorrichtung der Erfindung kann eine Geräuscherzeugungsanlage haben, mit der im Fahrschulfahrzeug ferngesteuert vom Fahrlehrerstand Geräusche wie z.B. Stimmen von Fahrgästen, Musik, Hintergrundgeräusche, wie sie auch bei einer realen Personenbeförderung auftreten können, im Fahrschulfahrzeug erzeugt und simuliert werden können.

Bevorzugt ist im Fahrschulfahrzeug eine Sensoreinrichtung zum Erfassen mindestens einer Funktion, z.B. der Geschwindigkeit, der Motordrehzahl, der Betätigung der Motorbremse usw., des Fahrschulfahrzeugs eingebaut. Informationen über diese Funktionen können dann zum Fahrlehrerstand und damit zum Fahrlehrer übertragen werden, der diese Informationen auswerten kann und in Antwort darauf entsprechende Steuerbefehle an das Fahrschulfahrzeug oder den Fahrschüler ausgeben kann.

Die Steuervorrichtung der Erfindung kann eine Sensoreinrichtung haben, die die Stellung eines Gaspedals als Maß für die Gaseinstellung oder Gasfunktion des Fahrschulfahrzeugs erfasst und in Informationen umsetzt.

Die Steuervorrichtung hat bevorzugt eine Sensoreinrichtung, die die Stellung eines Bremspedals des Fahrschulfahrzeugs als Maß für die Bremsbetätigung oder Bremsfunktion des Fahrschulfahrzeugs erfasst.

Die Steuervorrichtung hat bevorzugt eine Sensoreinrichtung, die die Stellung eines Kupplungspedals des Fahrschulfahrzeugs als Maß für die Kupplungsbetätigung oder Kupplungsfunktion des Fahrschulfahrzeugs erfasst.

Die Steuervorrichtung hat bevorzugt einen Geräuscherzeuger, der eine Aufzeichnungseinheit, in der mindestens ein Geräusch aufgezeichnet ist, eine Wiedergabeeinrichtung zum Wiedergeben und Aufbereiten eines Geräusches aus der Aufzeichnungseinheit und eine Lautsprechereinrichtung haben kann, die mit der Wiedergabeeinrichtung verbunden ist. Das Geräusch kann menschliche Hintergrundstimmen wiedergeben.

Die Steuervorrichtung der Erfindung kann eine Vorrangschaltung haben, die mit einem Blinkerschalter des Fahrschulfahrzeugs gekoppelt ist und den Vorrang der Blinkersteuerung durch die Steuervorrichtung gegenüber der Blinkersteuerung des Blinkgebers sicherstellt.

Die Fernsteuerung der Erfindung wird bevorzugt drahtlos, z.B. per Funk oder hochfrequenter, elektromagnetischer Strahlung, zwischen der Steuervorrichtung im Fahrschulfahrzeug und dem Fahrlehrerstand durchgeführt. Die Sende/Empfangseinheiten im Fahrschulfahrzeug und im Fahrlehrerstand können z.B. Funkmodule oder auch mobile Telefone wie Handys sein. Die zwischen dem Fahrschulfahrzeug und dem Fahrlehrerstand übertragenen Informationen werden bevorzugt codiert, um Fehler und Verfälschungen, die bei der Übertragung der gesendeten Funkinformationen eventuell auftreten könnten, ausschließen zu können, wodurch die Sicherheit des erfindungsgemäßen Systems verbessert wird.

Die Steuervorrichtung der Erfindung kann eine Anzeigeeinrichtung zum Anzeigen von Informationen haben, die der Fahrlehrerstand sendet.

Bevorzugt ist eine Videokamera im Fahrschulfahrzeug zum Erfassen des Sichtfeldes des Fahrschülers bei der Fahrt vorgesehen, wobei die von der Videokamera erzeugten Bildsignale ebenfalls über den Funkmodul im Fahrschulfahrzeug zu dem Funkmodul im Fahrlehrerstand übertragen werden können und dort auf einer Anzeigeeinrichtung, z.B. einem Monitor, dem Fahrlehrer angezeigt werden. Der Fahrlehrer kann dann das Fahrgeschehen und die Aktionen des Fahrschülers bei der Schulungsfahrt besser einschätzen und dementsprechend, falls erforderlich, in das Fahrgeschehen ferngesteuert eingreifen.

Der Fahrlehrerstand der Erfindung zur Verwendung in einem System zur Schulung eines Fahrschülers, der ein Fahrschulfahrzeug mit einer Steuervorrichtung zum Steuern von Funktionen oder Einrichtungen des Fahrschulfahrzeugs fährt, befindet sich außerhalb des Fahrschulfahrzeugs und ist mit der Steuervorrichtung des Fahrschulfahrzeugs zur Fernsteuerung von Funktionen des Fahrschulfahrzeugs gekoppelt. Der Fahrlehrerstand kann z.B. stationär angeordnet sein, z.B. in der Form eines stationär montierten Pults in einer exponierten Höhe, von der aus dar Fahrbetrieb überwacht und beobachtet werden kann. Ein solcher exponierter Standort des Fahrlehrerstands kann z.B. eine Tribüne oder ein Überwachungsturm an einem Rundkurs oder Übungskurs sein, auf dem das Fahrschulfahrzeug gelenkt durch den Fahrschüler fährt. Der Fahrlehrerstand kann aber auch mobil untergebracht sein, z.B. in einem weiteren Fahrzeug, das bevorzugt dem Fahrschulfahrzeug mit dem Fahrschüler folgt. Der Fahrlehrerstand ist dann im allgemeinen auf der Beifahrerseite des zusätzlichen Fahrzeugs untergebracht.

Der Fahrlehrerstand ist bevorzugt mit einer Eingabeeinrichtung zum Eingeben von Steuerbefehlen für die Fernsteuerung des Fahrschulfahrzeugs versehen. Diese Eingabeeinrichtung kann z.B. eine Tastatur, Taster und Schalter, einen Joystick oder ähnliche Einrichtungen aufweisen.

Der Fahrlehrerstand kann eine eigene Pedaleinrichtung haben, die bei Betätigung Steuerinformationen zur Steuerung des Fahrschulfahrzeugs erzeugt. Die Pedaleinrichtung kann ein Gaspedal oder ein Antigaspedal und/oder ein Kupplungspedal und/oder ein Bremspedal haben. Mit der extra Pedaleinrichtung des Fahrlehrerstands kann der Fahrlehrer somit die den Pedalen zugeordneten Funktionen des Fahrschulfahrzeugs fernsteuern.

Das Fahrschulfahrzeug zur Verwendung in einem System zur Schulung eines Fahrschülers, der das Fahrschulfahrzeug fährt, hat eine Steuervorrichtung der Erfindung und kann z.B. ein Personenkraftwagen, ein Lastkraftwagen, eine Zugmaschine, eine Zugmaschine mit Anhänger, ein Sattelschlepper mit Sattelaufleger, ein Omnibus, ein Motorrad, eine Motorboot usw. sein.

Der Fahrlehrerstand der Erfindung kann eine Pedaleinrichtung mit einem Gaspedal, das mit einem Sensor gekoppelt ist, der eine Pedalbetätigung erfasst und in Steuerinformationen umsetzt, einem Antigaspedal, das mit einem Sensor gekoppelt ist, der eine Pedalbetätigung erfasst und in Steuerinformationen umsetzt, einem Bremspedal, das mit einem Sensor gekoppelt ist, der eine Pedalbetätigung erfasst und in Steuerinformationen umsetzt, und/oder einem Kupplungspedal haben, das mit einem Sensor gekoppelt ist, der eine Pedalbetätigung erfasst und in Steuerinformationen umsetzt.

Bevorzugt hat der Fahrlehrerstand der Erfindung eine Lenkeinheit, die bei Betätigung Steuerinformationen für die Steuerung einer Lenkung des Fahrschulfahrzeugs erzeugt.

Der Fahrlehrerstand kann auch eine Blinkschaltereinrichtung haben, die bei Betätigung Steuerinformationen für die Steuerung einer Blinkanlage des Fahrschulfahrzeugs erzeugt.

Zudem kann der Fahrlehrerstand eine Lichtschalteinrichtung haben, die bei Betätigung Steuerinformationen für die Steuerung einer Lichtanlage des Fahrschulfahrzeugs erzeugt.

Der Fahrlehrerstand der Erfindung kann einen Motorbremseschalter haben, der bei Betätigung Steuerinformationen für die Steuerung einer Motorbremse des Fahrschulfahrzeugs erzeugt.

Vorzugsweise kann der Fahrlehrerstand einen Geräuschschalter haben, der bei Betätigung Steuerinformationen für einen Geräuscherzeuger im Fahrschulfahrzeug erzeugt.

Der Fahrlehrerstand der Erfindung kann drahtlos mit der Steuervorrichtung des Fahrschulfahrzeugs zum Senden von Steuerinformationen von dem Fahrlehrerstand zu dem Fahrschulfahrzeug und/oder zum Empfangen von Informationen von dem Fahrschulfahrzeug zu dem Fahrlehrerstand gekoppelt sein. Hierzu kann der Fahrlehrerstand einen Funkmodul und eine Antenne haben. Zudem kann der Funkmodul des Fahrlehrerstands einen Empfänger und/oder einen Sender haben. Die zwischen dem Fahrschulfahrzeug und dem Fahrlehrerstand ausgetauschten Informationen können codiert sein.

Die Steuervorrichtung der Erfindung und der Fahrlehrerstand der Erfindung können in einem System zur Schulung eines Fahrschülers verwendet werden, das ein Fahrschulfahrzeug, welches von einem Fahrschüler gefahren wird und die Steuervorrichtung der Erfindung zum Steuern von Funktionen oder Einrichtungen des Fahrschulfahrzeugs hat, und den Fahrlehrerstand der Erfindung aufweist, der sich außerhalb des Fahrschulfahrzeugs befindet und mit der Steuervorrichtung des Fahrschulfahrzeugs zur Fernsteuerung von Funktionen oder Einrichtungen des Fahrschulfahrzeugs gekoppelt ist. Dieses System kann ein zusätzliches Fahrzeug haben, in dem der Fahrlehrerstand der Erfindung untergebracht ist. Das Fahrzeug mit dem Fahrlehrerstand der Erfindung kann dem Fahrschulfahrzeug mit der Steuervorrichtung der Erfindung folgen.

Das in dem System verwendete zusätzliche Fahrzeug kann einen Fahrlehrerstand der Erfindung haben und kann z.B. eines der im vorhergehenden Absatz erwähnten Fahrzeuge sein. Das zusätzliche Fahrzeug kann jedoch vom Fahrzeugtyp her gesehen unterschiedlich zum Fahrschulfahrzeug sein. Beispielsweise kann das Fahrschulfahrzeug ein Omnibus und das zusätzliche, folgende Fahrzeug mit dem Fahrlehrerstand kann ein Auto sein.

Weitere vorteilhafte Weiterbildungen der Erfindung sind den Unteransprüchen zu entnehmen.

Weitere Vorteile, vorteilhafte Weiterbildungen und Anwendungsmöglichkeiten der Erfindung sind der nachfolgenden detaillierten Beschreibung einer beispielhaften und bevorzugten Ausführungsform der Erfindung in Verbindung mit den Zeichnungen zu entnehmen. Es zeigen:
- Fig. 1: eine schematische Ansicht eines beispielhaften Systems, das ein fernsteuerbares Fahrschulfahrzeug mit einer Steuervorrichtung gemäß Fig. 3 und ein weiteres Fahrzeug mit einem Fahrlehrerstand der Erfindung von Fig. 2 hat;
- Fig. 2: ein schematisches Blockschaltbild eines Fahrlehrerstands gemäß einer bevorzugten Ausführungsform der Erfindung; und
- Fig. 3: ein schematisches Blockschaltbild einer beispielhaften Steuervorrichtung gemäß einer bevorzugten Ausführungsform der Erfindung.

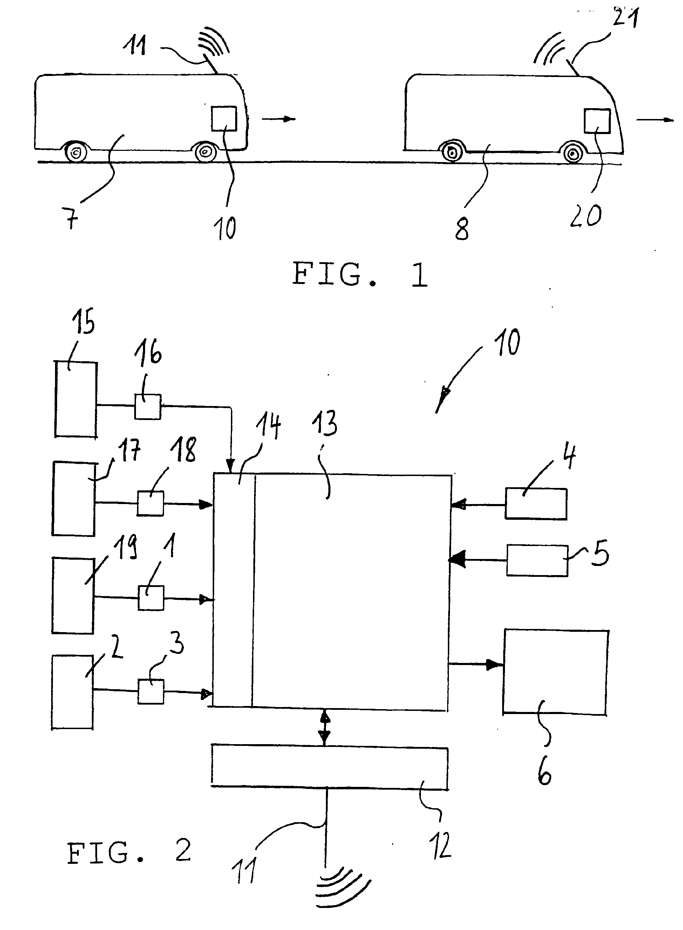

In der Fig. 1 ist ein beispielhaftes System der Erfindung gezeigt, das ein Fahrschulfahrzeug 8, z.B. einen Bus, das von einem Fahrschüler bevorzugt alleine gefahren wird, und ein weiteres Fahrzeug 7 hat, in dem der Fahrlehrer z.B. auf der Beifahrerseite sitzt, das dem fahrenden Fahrschulfahrzeug 8 bei der Schulungsfahrt folgt. Der Fahrlehrer im Fahrzeug 7 kann mit Hilfe eines Fahrlehrerstands 10 der Erfindung und einer Steuervorrichtung 20 der Erfindung Funktionen und Einrichtungen des Fahrschulfahrzeugs 8 aus der Ferne bei einer Schulungsfahrt überwachen und steuern.

In Fig. 2 ist ein schematisches Blockschaltbild eines beispielhaften Fahrlehrerstands 10 gemäß einer bevorzugten Ausführungsform der Erfindung gezeigt. Der Fahrlehrerstand 10 ist in dem zusätzlichen Fahrzeug 7 eingebaut und hat eine Antenne 11 zum Empfangen und Senden von Funksignalen bzw. Hochfrequenzsignalen, einen Funkmodul 12 und einen Mikrocomputer 13, wobei der Funkmodul 12 mit der Antenne 11 und dem Mikrocomputer 13 elektrisch verbunden ist.

Der Funkmodul 12 hat einen Sender und einen Empfänger. Der Empfänger ist mit der Antenne 11 verbunden und empfängt von ihr Funksignale im Hochfrequenzbereich, die der Empfänger wie üblich in einen Zwischenfrequenzbereich und dann in einen Niederfrequenzbereich heruntermischt oder demoduliert. Der Empfänger decodiert das demodulierte Signal und erzeugt ein decodiertes, Empfangsdigitalsignal, das er dem Mikrocomputer 13 zur weiteren Verarbeitung bereitstellt.

In der Senderichtung gesehen erzeugt der Mikrocomputer 13 ein Sendedigitalsignal und führt es dem Sender des Funkmoduls 12 zu, der es vom Niederfrequenzbereich über den Zwischenfrequenzbereich in den Hochfrequenzbereich hochmischt bzw. moduliert und der Antenne 11 zuführt. Die Antenne 11 strahlt das Signal als Funksignal ab.

Der Mikrocomputer 13 oder Mikroprozessor hat den üblichen Aufbau mit einer CPU, einem ROM-Speicher, einem RAM-Speicher, einem Bus, einem Taktgeber, einer Spannungsversorgung und einer Eingangs/Ausgangs-Schnittstelle. Mit der Eingangs/Ausgangs-Schnittstelle ist ein Analog/Digital-Wandler 14 verbunden.

Der Fahrlehrerstand 10 hat weiterhin einen Gaspedalsensor 16, der mit einem Gaspedal 15 gekoppelt ist, einen Kupplungspedalsensor 18, der mit einem Kupplungspedal 17 gekoppelt ist, einen Bremspedalsensor 1, der mit einem Bremspedal 19 gekoppelt ist und einen Lenkausschlagsensor 3, der mit einer Lenkeinheit 2 des Fahrlehrerstands 10 gekoppelt ist. Die Sensoren 16, 18, 1 und 3 können jeweils als Wegpotentiometer oder Winkelpotentiometer ausgelegt sein, um die Momentanstellung der entsprechenden Pedale 15, 17 bzw. 19 bzw. der Lenkeinheit 2 erfassen zu können. Die Pedale 15, 17, 19 und die Lenkeinheit 2 werden vom Fahrlehrer im Fahrzeug 7 betätigt und sind vollkommen unabhängig von dem Pedalsatz des Fahrzeugs 7.

Der Mikrocomputer 13 ist auch mit einem Geräuschschalter 4 und einem Blinkerschalter 5 verbunden. Eine Anzeigeeinrichtung 6, die mit dem Mikrocomputer 13 verbunden ist, zeigt die momentane Drehzahl und die momentane Geschwindigkeit des Fahrschulfahrzeugs 8 an.

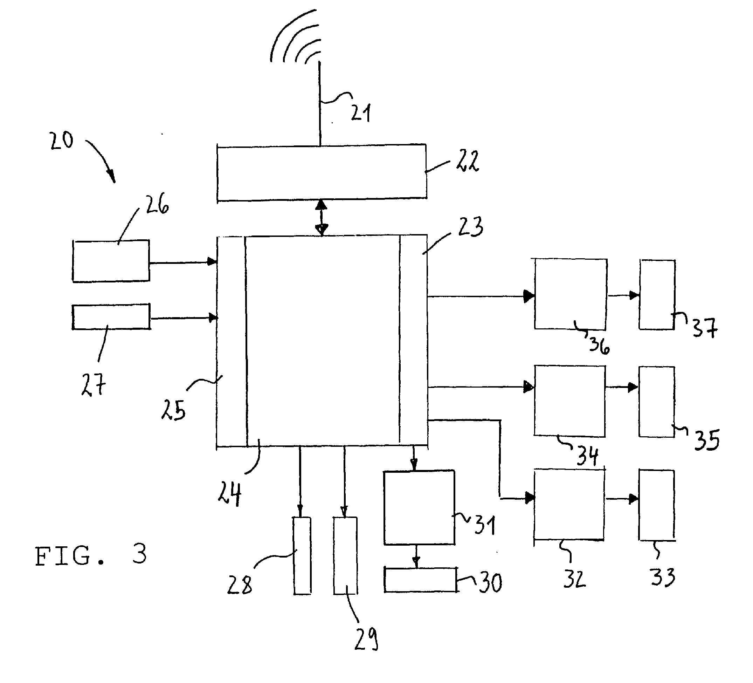

In Fig. 3 ist ein schematisches Blockschaltbild einer beispielhaften Steuervorrichtung 20 gemäß einer bevorzugten Ausführungsform der Erfindung gezeigt. Die gezeigte Steuervorrichtung 20 ist in dem Fahrschulfahrzeug 8 eingebaut und hat eine Antenne 21 zum Empfangen und Senden von Funksignalen bzw. Hochfrequenzsignalen, einen Funkmodul 22 und einen Mikrocomputer 24, wobei der Funkmodul 22 mit der Antenne und dem Mikrocomputer 24 elektrisch verbunden ist.

Der Funkmodul 22 hat einen Sender und einen Empfänger. Der Empfänger ist mit der Antenne 21 verbunden und empfängt von ihr Funksignale im Hochfrequenzbereich, die der Empfänger wie üblich in einen Zwischenfrequenzbereich und dann in einen Niederfrequenzbereich heruntermischt oder demoduliert. Der Empfänger decodiert das demodulierte Signal und erzeugt ein decodiertes, Empfangsdigitalsignal, das er dem Mikrocomputer 24 zur weiteren Verarbeitung bereitstellt.

In der Senderichtung gesehen, erzeugt der Mikrocomputer 24 ein Sendedigitalsignal und führt es dem Sender des Funkmoduls 22 zu, der es vom Niederfrequenzbereich über den Zwischenfrequenzbereich in den Hochfrequenzbereich hochmischt bzw. moduliert und der Antenne 21 zuführt. Die Antenne 21 strahlt das Signal als Funksignal ab.

Der Mikrocomputer 24 oder Mikroprozessor hat den üblichen Aufbau mit einer CPU, einem ROM-Speicher, einem RAM-Speicher, einem Bus, einem Taktgeber, einer Spannungsversorgung und einer Eingangs/Ausgangs-Schnittstelle. Mit der Eingangs/Ausgangs-Schnittstelle sind ein Analog/Digital-Wandler 25 und ein Digital/Analog-Wandler 23 verbunden.

Die Steuervorrichtung 20 hat weiterhin einen Gaspedalaktor 36 zum Stellen eines Gaspedals 37 des Fahrschulfahrzeugs, einen Kupplungspedalaktor 34 zum Stellen eines Kupplungspedals 35 des Fahrschulfahrzeugs, einen Bremspedalaktor 32 zum Stellen oder Betätigen eines Bremspedals 33 des Fahrschulfahrzeugs 8 und einen Lenkungsaktor 31 zum Einstellen des Lenkausschlags der Lenkung 30 des Fahrschulfahrzeugs. Als Aktoren 31, 32, 34 und 36 kann jeweils z.B. ein Elektromotor, insbesondere ein Schrittmotor, verwendet werden.

Der Mikrocomputer 24 ist auch mit einem Geräuscherzeuger 29 und einer Blinkeinrichtung 28 des Fahrschulfahrzeugs 8 verbunden. Der Geräuscherzeuger 29 erzeugt in Antwort auf ein entsprechendes Steuersignal von dem Mikrocomputer 24 im Inneren des Fahrschulfahrzeugs ein akustisches Geräusch, z.B. Hintergrundstimmen, die bei einer realen Fahrt eines Busses auftreten können und den Fahrer beeinflussen oder sogar stören können. Der Geräuscherzeuger 29 hat eine Aufzeichnungseinheit, in der ein oder mehrere Geräusche aufgezeichnet oder gespeichert sind, eine Wiedergabeeinheit, die ein Geräusch aus der Geräuschaufzeichnungseinheit in Antwort auf ein Steuersignal von dem Mikrocomputer 24 ausliest und verstärkt und einem Lautsprecher oder mehreren Lautsprechern im Fahrschulfahrzeug für die akustische Wiedergabe des Geräusches zuführt. Als Aufzeichnungseinheit kann z.B. der ROM-Speicher oder RAM-Speicher des Mikrocomputers 24 verwendet werden, in dem das Geräusch z.B. als WAV-Datei abgespeichert ist. Im Mikrocomputer 24 ist in diesem Fall ein sog. MEDIA-Player-Programm implementiert, das die Geräusch-WAV-Datei bei Anforderung ausliest und einem Sound-Board als Wiedergabeeinheit zuführt, dessen Sound-Ausgang wiederum mit den Lautsprechern verbunden ist.

Stellt der Fahrlehrer im Fahrzeug 7 mit dem Fahrlehrerstand 10 fest, dass das vor ihm fahrende Fahrschulfahrzeug 8 mit der Steuervorrichtung 20 mit einer zu hohen Geschwindigkeit fährt, wird der Fahrlehrer zunächst das Kupplungspedal 17 der Pedaleinrichtung des Fahrlehrerstands 10 treten. Der Kupplungspedalsensor 18 erfasst die Auslenkung des Kupplungspedals 17 und erzeugt ein entsprechendes elektrisches, analoges Steuersignal, das ein Maß für die Auslenkung des Kupplungspedals 17 ist und das der Analog/Digital-Wandler 14 in ein digitales Steuersignal wandelt und dem Mikrocomputer 13 zur weiteren Verarbeitung zuführt. Der Mikrocomputer 13 versieht das digitale Steuersignal mit einer Adresse, die dem Kupplungspedalaktor 34 der Steuervorrichtung 20 des Fahrschulfahrzeugs 8 zugeordnet ist, und bringt das digitale Steuersignal und die Adresse in einem Datenrahmen unter. Der Datenrahmen wird vom Mikrocomputer 13 dem Funkmodul 12 zugeführt, der den Datenrahmen codiert, in den Hochfrequenzbereich hochmischt und über die Antenne 11 abstrahlt. Die Antenne 21 der Steuervorrichtung 20 im Fahrschulfahrzeug 8 empfängt das abgestrahlte Funksignal und führt es dem Funkmodul 22 zu. Der Funkmodul 22 mischt das hochfrequente Signal in den Niederfrequenzbereich herunter, decodiert es und gibt den decodierten Datenrahmen an den Mikrocomputer 24 der Steuervorrichtung 20 aus. Der Mikrocomputer 24 entnimmt die Adresse für den Kupplungspedalaktor 34 und das digitale Steuersignal dem empfangenen Datenrahmen und gibt das digitale Steuersignal über den Digital/Analog-Wandler 23 an den Kupplungspedalaktor 34 aus, der das Kupplungspedal 35 des Fahrschulfahrzeugs 8 entsprechend dem Steuersignal stellt, wobei das Stellen des Kupplungspedals 35 durch den Kupplungspedalaktor 34 vorrangig zu der Betätigung des Kupplungspedals 35 durch den Fahrschüler geschieht.

Zum Abbremsen des Fahrschulfahrzeugs betätigt der Fahrlehrer nun das Bremspedal 19 der Pedaleinrichtung des Fahrlehrerstands 10. Der Bremspedalsensor 1 erfasst die Auslenkung des Bremspedals 19 und erzeugt ein entsprechendes elektrisches, analoges Steuersignal, das ein Maß für die Auslenkung des Bremspedals 19 ist und das der Analog/Digital-Wandler 14 in ein digitales Steuersignal wandelt und dem Mikrocomputer 13 zur weiteren Verarbeitung zuführt. Der Mikrocomputer 13 versieht das digitale Steuersignal mit einer Adresse, die dem Bremspedalaktor 32 der Steuervorrichtung 20 des Fahrschulfahrzeugs 8 zugeordnet ist, und bringt das digitale Steuersignal und die Adresse wiederum in einem Datenrahmen unter. Der Datenrahmen wird vom Mikrocomputer 13 dem Funkmodul 12 zugeführt, der den Datenrahmen codiert, in den Hochfrequenzbereich hochmischt und über die Antenne 11 abstrahlt. Die Antenne 21 der Steuervorrichtung 20 im Fahrschulfahrzeug 8 empfängt das abgestrahlte Funksignal und führt es dem Funkmodul 22 zu. Der Funkmodul 22 mischt das hochfrequente Signal in den Niederfrequenzbereich herunter, decodiert es und gibt den decodierten Datenrahmen an den Mikrocomputer 24 der Steuervorrichtung 20 aus. Der Mikrocomputer 24 entnimmt die Adresse für den Bremspedalaktor 32 und das digitale Steuersignal dem empfangenen Datenrahmen und gibt das digitale Steuersignal über den Digital/Analog-Wandler 23 an den Bremspedalaktor 32 aus, der das Bremspedal 33 des Fahrschulfahrzeugs 8 entsprechend dem Steuersignal stellt, wobei das Stellen des Bremspedals 33 durch den Bremspedalaktor 32 vorrangig zu der Betätigung des Bremspedals 33 durch den Fahrschüler ist.

Fährt der Fahrschüler zum Beispiel zu langsam, kann der Fahrlehrer das Gaspedal 15 des Fahrlehrerstands 10 betätigen. Der Gaspedalsensor 16 erfasst die Auslenkung des Gaspedals 15 und erzeugt ein entsprechendes elektrisches, analoges Steuersignal, das ein Maß für die Auslenkung des Gaspedals 15 ist und das der Analog/Digital-Wandler 14 in ein digitales Steuersignal wandelt und dem Mikrocomputer 13 zur weiteren Verarbeitung zuführt. Der Mikrocomputer 13 versieht das digitale Steuersignal mit einer Adresse, die dem Gaspedalaktor 36 der Steuervorrichtung 20 des Fahrschulfahrzeugs 8 zugeordnet ist, und bringt das digitale Steuersignal und die Adresse in einem Datenrahmen unter. Der Datenrahmen wird vom Mikrocomputer 13 dem Funkmodul 12 zugeführt, der den Datenrahmen codiert, in den Hochfrequenzbereich hochmischt und über die Antenne 11 abstrahlt. Die Antenne 21 der Steuervorrichtung 20 im Fahrschulfahrzeug 8 empfängt das abgestrahlte Funksignal und führt es dem Funkmodul 22 zu. Der Funkmodul 22 mischt das hochfrequente Signal in den Niederfrequenzbereich herunter, decodiert es und gibt den decodierten Datenrahmen an den Mikrocomputer 24 der Steuervorrichtung 20 aus. Der Mikrocomputer 24 entnimmt die Adresse für den Gaspedalaktor 36 und das digitale Steuersignal dem empfangenen Datenrahmen und gibt das digitale Steuersignal über den Digital/Analog-Wandler 23 an den Gaspedalaktor 36 aus, der das Gaspedal 37 des Fahrschulfahrzeugs 8 entsprechend dem Steuersignal stellt, wobei das Stellen des Gaspedals 37 durch den Gaspedalaktor 36 vorrangig zu der Betätigung des Gaspedals 37 durch den Fahrschüler eingerichtet ist.

Muss der Fahrlehrer die Lenkung des Fahrschulfahrzeugs 8 korrigieren, betätigt der Fahrlehrer die Lenkeinheit 2, z.B. ein extra Lenkrad oder einen Joystick, des Fahrlehrerstands 10. Der Lankausschlagsensor 3 erfasst die Auslenkung der Lenkeinheit 2 und erzeugt ein entsprechendes elektrisches, analoges Steuersignal, das ein Maß für die Betätigung der Lenkeinheit 2 ist und das der Analog/Digital-Wandler 14 in ein digitales Steuersignal wandelt und dem Mikrocomputer 13 zur weiteren Verarbeitung zuführt. Der Mikrocomputer 13 versieht das digitale Steuersignal mit einer Adresse, die dem Lenkungsaktor 31 der Steuervorrichtung 20 des Fahrschulfahrzeugs 8 zugeordnet ist, und bringt das digitale Steuersignal und die Adresse in einem Datenrahmen unter. Der Datenrahmen wird vom Mikrocomputer 13 dem Funkmodul 12 zugeführt, der den Datenrahmen codiert, in den Hochfrequenzbereich hochmischt und über die Antenne 11 abstrahlt. Die Antenne 21 der Steuervorrichtung 20 im Fahrschulfahrzeug 8 empfängt das abgestrahlte Funksignal und führt es dem Funkmodul 22 zu. Der Funkmodul 22 mischt das hochfrequente Signal in den Niederfrequenzbereich herunter, decodiert es und gibt den decodierten Datenrahmen an den Mikrocomputer 24 der Steuervorrichtung 20 aus. Der Mikrocomputer 24 entnimmt die Adresse für den Lenkungsaktor 31 und das digitale Steuersignal dem empfangenen Datenrahmen und gibt das digitale Steuersignal über den Digital/Analog-Wandler 23 an den Lenkungsaktor 31 aus, der die Lenkung 30 des Fahrschulfahrzeugs 8 entsprechend dem Steuersignal stellt, wobei das Stellen der Lenkung 30 durch den Lenkungsaktor 31 vorrangig zu der Betätigung der Lenkung 30 durch den Fahrschüler geschieht.

Will der Fahrlehrer ein Geräusch oder einen Ton im fahrenden Fahrschulfahrzeug 8 erzeugen, betätigt er den Geräuschschalter 4 des Fahrlehrerstands 10. Die Betätigung des Geräuschschalters 4 wird vom Mikrocomputer 13 durch Polling festgestellt und der Mikrocomputer 13 erzeugt ein zugeordnetes Steuersignal für den Geräuscherzeuger 29 des Fahrschulfahrzeugs 8. Der Mikrocomputer 13 versieht das digitale Steuersignal mit einer Adresse, die dem Geräuscherzeuger 29 zugeordnet ist, und bringt das digitale Steuersignal und die Adresse in einem Datenrahmen unter. Der Datenrahmen wird vom Mikrocomputer 13 dem Funkmodul 12 zugeführt, der den Datenrahmen codiert, in den Hochfrequenzbereich hochmischt und über die Antenne 11 abstrahlt. Die Antenne 21 der Steuervorrichtung 20 im Fahrschulfahrzeug 8 empfängt das abgestrahlte Funksignal und führt es dem Funkmodul 22 zu. Der Funkmodul 22 mischt das hochfrequente Signal in den Niederfrequenzbereich herunter, decodiert es und gibt den decodierten Datenrahmen an den Mikrocomputer 24 der Steuervorrichtung 20 aus. Der Mikrocomputer 24 entnimmt die Adresse für den Geräuscherzeuger 29 und das digitale Steuersignal dem empfangenen Datenrahmen und gibt das digitale Steuersignal an den Geräuscherzeuger 29 aus, der dann das Geräusch, z.B. menschliche Hintergrundstimmen, über einen Lautsprecher im Fahrschulfahrzeug akustisch erzeugt.

Will der Fahrlehrer eine Blinkerbetätigung des Fahrschülers im fahrenden Fahrschulfahrzeug 8 berichtigen, betätigt er den Blinkerschalter 5 des Fahrlehrerstands 10. Die Betätigung des Blinkerschalters 5 wird vom Mikrocomputer 13 durch Polling festgestellt und der Mikrocomputer 13 erzeugt ein zugeordnetes Steuersignal für eine Blinkanlage 28 des Fahrschulfahrzeugs 8. Der Mikrocomputer 13 versieht das digitale Steuersignal mit einer Adresse, die der Blinkanlage 28 zugeordnet ist, und bringt das digitale Steuersignal und die Adresse in einem Datenrahmen unter. Der Datenrahmen wird vom Mikrocomputer 13 dem Funkmodul 12 zugeführt, der den Datenrahmen codiert, in den Hochfrequenzbereich hochmischt und über die Antenne 11 abstrahlt. Die Antenne 21 der Steuervorrichtung 20 im Fahrschulfahrzeug 8 empfängt das abgestrahlte Funksignal und führt es dem Funkmodul 22 zu. Der Funkmodul 22 mischt das hochfrequente Signal in den Niederfrequenzbereich herunter, decodiert es und gibt den decodierten Datenrahmen an den Mikrocomputer 24 der Steuervorrichtung 20 aus. Der Mikrocomputer 24 entnimmt die Adresse für die Blinkanlage 28 und das digitale Steuersignal dem empfangenen Datenrahmen und gibt das digitale Steuersignal an die Blinkanlage 28 aus. Die Blinkanlage 28 hat eine Vorrangschaltung, die mit einem Blinkerschalter des Fahrschulfahrzeugs 8 gekoppelt ist und den Vorrang der Blinkersteuerung durch die Steuervorrichtung 10 gegenüber der Blinkersteuerung des Blinkerschalters sicherstellt.

Die Steuervorrichtung 20 hat weiterhin einen Geschwindigkeitssensor 26 einer Sensoreinrichtung, der die Geschwindigkeit des Fahrschulfahrzeugs 8 erfasst, ein analoges Signal erzeugt, das ein Maß für die Geschwindigkeit des Fahrschulfahrzeugs 8 ist, und das Signal an den Analog/Digital-Wandler 25 ausgibt, der das analoge Signal von dem Geschwindigkeitssensor 26 in ein digitales Signal wandelt und dieses dem Mikrocomputer 24 zur weiteren Verarbeitung zur Verfügung stellt. Der Mikrocomputer 24 versieht das digitale Steuersignal mit einer Adresse, die der Anzeigeeinrichtung 6 des Fahrlehrerstands 10 zugeordnet ist, und bringt das digitale Steuersignal und die Adresse in einem Datenrahmen unter. Der Datenrahmen wird vom Mikrocomputer 24 dem Funkmodul 22 zugeführt, der den Datenrahmen codiert, in den Hochfrequenzbereich hochmischt und über die Antenne 21 abstrahlt. Die Antenne 11 des Fahrlehrerstands 10 im Fahrzeug 7 empfängt das abgestrahlte Funksignal und führt es dem Funkmodul 12 zu. Der Funkmodul 12 mischt das hochfrequente Signal in den Niederfrequenzbereich herunter, decodiert es und gibt den decodierten Datenrahmen an den Mikrocomputer 13 des Fahrlehrerstands 10 aus. Der Mikrocomputer 13 entnimmt die Adresse für die Anzeigeeinrichtung 6 und das digitale Steuersignal dem empfangenen Datenrahmen und gibt das digitale Steuersignal an die Anzeigeeinrichtung 6 aus, die eine dem Steuersignal entsprechende Geschwindigkeit des Fahrschulfahrzeugs 8 anzeigt.

Ein Drehzahlsensor 27 der Steuervorrichtung 20 erfasst die Drehzahl des Motors im Fahrschulfahrzeug 8, erzeugt ein Signal, dass ein Maß für die Drehzahl ist, und gibt das Signal an den Analog/Digital-Wandler 25 aus, der das analoge Signal vom Drehzahlsensor 27 in ein digitales Signal wandelt und dem Mikrocomputer 24 bereitstellt. Der Mikrocomputer 24 versieht das digitale Steuersignal mit einer Adresse, die der Anzeigeeinrichtung 6 des Fahrlehrerstands 10 zugeordnet ist, und bringt das digitale Steuersignal und die Adresse in einem Datenrahmen unter. Der Datenrahmen wird vom Mikrocomputer 24 dem Funkmodul 22 zugeführt, der den Datenrahmen codiert, in den Hochfrequenzbereich hochmischt und über die Antenne 21 abstrahlt. Die Antenne 11 des Fahrlehrerstands 10 im Fahrzeug 7 empfängt das abgestrahlte Funksignal und führt es dem Funkmodul 12 zu. Der Funkmodul 12 mischt das hochfrequente Signal in den Niederfrequenzbereich herunter, decodiert es und gibt den decodierten Datenrahmen an den Mikrocomputer 13 des Fahrlehrerstands 10 aus. Der Mikrocomputer 13 entnimmt die Adresse für die Anzeigeeinrichtung 6 und das digitale Steuersignal dem empfangenen Datenrahmen und gibt das digitale Steuersignal an die Anzeigeeinrichtung 6 aus, die eine dem Steuersignal entsprechende Motordrehzahl des Fahrschulfahrzeugs 8 anzeigt.

## Patentansprüche

1. Steuervorrichtung zur Verwendung in einem Fahrschulfahrzeug (8), das von dem Fahrschüler gefahren wird, wobei die Steuervorrichtung (20) Funktionen oder Einrichtungen des Fahrschulfahrzeugs (8) steuert und mit einem Fahrlehrerstand (10), der sich außerhalb des Fahrschulfahrzeugs (8) befindet, zur Fernsteuerung von Funktionen oder Einrichtungen des Fahrschulfahrzeugs (8) gekoppelt ist,
**dadurch gekennzeichnet,**
**dass** die Steuervorrichtung einen Aktor (36) zum Stellen eines Gaspedals (37) der Gasanlage des Fahrschulfahrzeugs (8), einen Aktor (32) zum Stellen eines Bremspedals (33) der Bremsanlage des Fahrschulfahrzeugs (8), einen Aktor (34) zum Stellen eines Kupplungspedals (35) der Kupplungsanlage des Fahrschulfahrzeugs (8) und/oder einen Aktor (31) zum Einstellen des Lenkausschlags der Lenkanlage (30) des Fahrschulfahrzeugs (8) hat, wobei die Aktoren zur Fernsteuerung ihrer Funktionen mit dem Fahrlehrerstand (10) gekoppelt sind, und
**dass** die Steuervorrichtung eine Sensoreinrichtung zum Erfassen der Gaseinstellung, eine Sensoreinrichtung zum Erfassen der Bremsbetätigung, eine Sensoreinrichtung zum Erfassen der Kupplungsbetätigung und/oder eine weitere Sensoreinrichtung zum Erfassen mindestens einer Funktion des Fahrschulfahrzeugs (8), wobei die weitere Sensoreinrichtung einen Sensor (26) zum Detektieren der Geschwindigkeit des Fahrschulfahrzeugs (8), einen Sensor (28) zum Detektieren der Drehzahl des Motors des Fahrschulfahrzeugs (8), einen Sensor zum Detektieren der Stellung einer Motorbremse des Fahrschulfahrzeugs (8) und/oder eine Videokamera zum Erzeugen eines Bildes des Sichtfeldes des Fahrschülers hat, wobei die Sensoreinrichtungen mit dem Fahrlehrerstand zum Übertragen der erfassten Informationen zu dem Fahrlehrerstand gekoppelt sind.

2. Steuervorrichtung nach Anspruch 1, **dadurch gekennzeichnet, dass** sie mit einer Gasanlage, einer Bremsanlage, einer Kupplungsanlage, einer Blinkanlage (28) und/oder einer Lenkanlage (30) des Fahrschulfahrzeugs (8) gekoppelt ist und diese vorrangig steuert.

3. Steuervorrichtung nach einem der vorstehenden Ansprüche, **gekennzeichnet durch** einen Geräuscherzeuger (29).

4. Steuervorrichtung nach einem der vorstehenden Ansprüche, **dadurch gekennzeichnet, dass** die Steuervorrichtung (20) des Fahrschulfahrzeugs (8) drahtlos mit dem Fahrlehrerstand (10) zum Empfangen von Informationen von dem Fahrlehrerstand (10) zum Steuern des Fahrschulfahrzeugs (8) und/oder zum Senden von Informationen zu dem Fahrlehrerstand (10) gekoppelt ist.

5. Steuervorrichtung nach Anspruch 4, **dadurch gekennzeichnet, dass** die Steuervorrichtung (20) einen Funkmodul (22) und eine Antenne (21) hat, die mit dem Funkmodul (22) verbunden ist, und dass der Funkmodul (22) einen Empfänger und/oder einen Sender hat oder das der Funkmodul (22) ein mobiles Telefon ist.

6. Steuervorrichtung nach einem der vorstehenden Ansprüche, **dadurch gekennzeichnet, dass** die Steuervorrichtung eine Anzeigeeinrichtung zum Anzeigen von Informationen hat, die der Fahrlehrerstand sendet.

7. Fahrlehrerstand zur Verwendung in einem System zur Schulung eines Fahrschülers, der ein Fahrschulfahrzeug (8) mit einer Steuervorrichtung nach Anspruch 1 (20) zum Steuern von Funktionen oder Einrichtungen des Fahrschulfahrzeugs (8) fährt, wobei sich der Fahrlehrerstand (10) außerhalb des Fahrschulfahrzeugs (8) befindet und mit der Steuervorrichtung (20) des Fahrschulfahrzeugs (8) zur Fernsteuerung von Funktionen oder Einrichtungen des Fahrschulfahrzeugs (8) gekoppelt ist,
**dadurch gekennzeichnet,**
**dass** der Fahrlehrerstand (10) eine Pedaleinrichtung hat, die bei Betätigung Steuerinformationen zu Steuerung des Fahrschulfahrzeugs (8) erzeugt, und dass die Pedaleinrichtung ein Gaspedal (15), ein Antigaspedal, ein Kupplungspedal (17) und/oder ein Bremspedal (19) hat.

8. Fahrlehrerstand nach Anspruch 7, **dadurch gekennzeichnet, dass** der Fahrlehrerstand stationär angeordnet ist oder dass der Fahrlehrerstand (10) in einem zusätzlichen Fahrzeug (7) untergebracht ist.

## Claims

1. Controlling device for use in a driving school vehicle (8) being driven by a driving learner, the controlling device (20) controlling functions and means of the driving school vehicle (8) and being coupled to a driving instructor post (10) for remote control of functions and means of the driving school vehicle (8), the driving instructor post being located outside of the driving school vehicle (8),
**characterized in**
**that** the controlling device has an actuator (36) for adjusting an accelerator pedal (37) of the accelerator means of the driving school vehicle (8), an actuator (32) for adjusting the brake pedal (33) of the brake means of the driving school vehicle (8), an actuator (34) for adjusting of a clutch pedal (35) of the clutch means of the driving school vehicle (8), and/or an actuator (31) for adjusting the steering amplitude of the steering means (30), the actuators are coupled to the driving instructor post (10) for remote control of their functions, and
**that** the controlling device has sensor means for detecting adjustment of accelerator, sensor means for detecting operation of brakes, sensor means for detecting operation of clutch, and/or further sensor means for detecting at least one function of the driving school vehicle (8), the further sensor means comprising a sensor (26) for detecting the speed of the driving school vehicle (8), a sensor (28) for detecting engine revolution speed of the driving school vehicle (8), a sensor for detecting adjustment of engine brake of the driving school vehicle (8), and/or a video camera for forming an image of the visual area of the driving learner, the sensor means being coupled to the driving instructor post for transferring information.

2. Controlling device according to claim 1, **characterized in that** it is coupled to accelerator means, brake means, clutch means, blinker means (28), and/or steering means (30) of the driving school vehicle (8), and that it controls them preferentially.

3. Controlling device according to any of the preceding claims, **characterized by** a noise or sound generator (29).

4. Controlling device according to any of the preceding claims, **characterized in that** the controlling device (20) of the driving school vehicle (8) is coupled in a wireless manner to the driving instructor post (10) for receiving information for controlling the driving school vehicle (8) from the driving instructor post (10), and/or for transmitting information to the driving instructor post (10).

5. Controlling device according to claim 4, **characterized in that** the controlling device (20) has a radio module (22) and an antenna (21) being connected to the radio module (22), and that the radio module (22) has a receiver and/or a transmitter, or that the radio module (22) is a mobile phone.

6. Controlling device according to any of the preceding claims, **characterized in that** the controlling device has display means for displaying or indicating information being transmitted by the driving instructor post.

7. Driving instructor post for use in a system for teaching a driving learner that drives a driving school vehicle (8) having a controlling device (20) according to claim 1 for controlling functions or means of the driving school vehicle (8), the driving instructor post (10) being located outside of the driving school vehicle (8) and being coupled to the controlling device (20) of the driving school vehicle (8) for remote control of functions and means of the driving school vehicle (8),
**characterized in**
**that** the driving instructor post (10) has pedal means that, during operation, generate controlling information for controlling the driving school vehicle (8) and that the pedal means has an accelerator or gas pedal (15), an anti-gas pedal, a clutch pedal (17), and/or a brake pedal (19).

8. Driving instructor post according to claim 7, **characterized in that** the driving instructor post is arranged in a stationary manner or that the driving instructor post (10) is housed in a further vehicle (7).

## Revendications

1. Dispositif de pilotage à utiliser dans un véhicule d'auto-école (8) qui est conduit par l'élève d'auto-. école, le dispositif de pilotage (20) commandant des fonctions ou des mécanismes du véhicule d'auto-école (8) et étant couplé à une cabine de moniteur d'auto-école (10), qui se trouve à l'extérieur du véhicule d'auto-école (8), pour le pilotage à distance de fonction ou de mécanismes du véhicule d'auto-école (8), **caractérisé en ce que** le dispositif de pilotage possède un actionneur (36) pour le réglage d'une pédale d'accélérateur (37) du système d'accélération du véhicule d'auto-école (8), un actionneur (32) pour le réglage d'une pédale de frein (33) du système de freinage du véhicule d'auto-école (8), un actionneur (34) pour le réglage d'une pédale d'embrayage (35) du système d'embrayage du véhicule d'auto-école (8) et/ou un actionneur (31) pour le réglage du changement de direction du système de direction (30) du véhicule d'auto-école (8), les actionneurs étant couplés, pour la commande à distance de leurs fonctions, à la cabine de moniteur d'auto-école (10), et **en ce que** le dispositif de pilotage possède un mécanisme de détection pour enregistrer le réglage de l'accélération, un mécanisme de détection pour enregistrer la manoeuvre de freinage, un mécanisme de détection pour enregistrer la manoeuvre d'embrayage et/ou un mécanisme de détection supplémentaire pour enregistrer au moins une fonction du véhicule d'auto-école (8), le mécanisme de détection supplémentaire possédant un capteur (26) pour détecter la vitesse du véhicule d'auto-école (8), un capteur (28) pour détecter la vitesse de rotation du moteur du véhicule d'auto-école (8), un capteur pour détecter la position d'un frein moteur du véhicule d'auto-école (8) et/ou une caméra vidéo pour générer une image du champ de vision de l'élève d'auto-école, les mécanismes de détection étant couplés à la cabine de moniteur d'auto-école pour transmettre les informations enregistrées à la cabine de moniteur d'auto-école.

2. Dispositif de pilotage selon la revendication 1, **caractérisé en ce qu'**il est couplé à un système d'accélération, à un système de freinage, à un système de débrayage, à un dispositif clignotant de signalisation (28) et/ou à un système de direction (30) du véhicule d'auto-école et commande le système ou le dispositif en question en priorité.

3. Dispositif de pilotage selon l'une quelconque des revendications précédentes, **caractérisé par** un dispositif de sonorisation (29).

4. Dispositif de pilotage selon l'une quelconque des revendications précédentes, **caractérisé en ce que** le dispositif de pilotage (20) du véhicule d'auto-école (8) est couplé sans fil à la cabine de moniteur d'auto-école (10) pour la réception d'informations par la cabine de moniteur d'auto-école (10) pour le pilotage du véhicule d'auto-école (8) et/ou pour l'envoi d'informations à la cabine de moniteur d'auto-école (10).

5. Dispositif de pilotage selon la revendication 4, **caractérisé en ce que** le dispositif de pilotage (20) possède un module sans fil (22) et une antenne (21) qui est reliée au module sans fil (22), et **en ce que** le module sans fil (22) possède un récepteur et/ou un émetteur ou bien **en ce que** le module sans fil (22) est un téléphone mobile.

6. Dispositif de pilotage selon l'une quelconque des revendications précédentes, **caractérisé en ce que** le dispositif de pilotage possède un mécanisme d'affichage pour afficher des informations qu'envoie la cabine de moniteur d'auto-école.

7. Cabine de moniteur d'auto-école à utiliser dans un système pour la formation d'un élève d'auto-école qui conduit un véhicule d'auto-école (8) comprenant un dispositif de pilotage selon la revendication 1 (20) pour commander des fonctions ou des mécanismes du véhicule d'auto-école (8), la cabine de moniteur d'auto-école se trouvant à l'extérieur du véhicule d'auto-école (8) et étant couplé au dispositif de pilotage (20) du véhicule d'auto-école (8) pour la commande à distance de fonctions ou de mécanismes du véhicule d'auto-école (8), **caractérisée en ce que** la cabine de moniteur d'auto-école (10) possède un mécanisme à pédale qui génère, lorsqu'on l'actionne, des informations de commande pour le pilotage du véhicule d'auto-école (8), et **en ce que** le mécanisme à pédale possède une pédale d'accélérateur (15), une pédale d'anti-accélérateur, une pédale de débrayage (17) et/ou une pédale de frein (19).

8. Cabine de moniteur d'auto-école selon la revendication 7, **caractérisée en ce que** la cabine de moniteur d'auto-école est disposée en position stationnaire ou bien **en ce que** la cabine de moniteur d'auto-école (10) est montée dans un véhicule supplémentaire (7).
